# EUROPEAN PATENT SPECIFICATION

(11) **EP 1 070 970 B1**
(45) Date of publication and mention of the grant of the patent: **27.08.2003**
(21) Application number: 00202401.6
(22) Date of filing: 06.07.2000
(51) Int. Cl.: G01V 11/00

(54) **A method of three dimensional reconstructing a physical magnitude inside a borehole**
Ein Verfahren zur dreidimensionalen Rekonstruction einer physikalischen Grösse in einem Bohrloch
Procédé de reconstruction tridimensionnelle d'une grandeur physique dans un forage

(30) Priority: 22.07.1999 FR 9909532
(43) Date of publication of application: 24.01.2001
(73) Proprietor: Schlumberger Technology B.V., 2514 JG Den Haag (NL); SERVICES PETROLIERS SCHLUMBERGER, 75007 Paris (FR); SCHLUMBERGER HOLDINGS LIMITED, Road Town, Tortola (VG)
(72) Inventor: Delhomme, Jean-Pierre, 92100 Boulogne Billancourt (FR); Anxionnaz, Herve, 92320 Chatillon (FR)
(74) Representative: Hyden, Martin

(56) References cited:
- EP-A- 0 460 927
- EP-A- 0 561 492
- DELHOMME J P ET AL: "Permeability and porosity upscaling in the near-wellbore domain: The contribution of borehole electrical images" PROCEEDINGS OF THE 1996 EUROPEAN PETROLEUM CONFERENCE. PART 1 (OF 2);MILAN, ITALY OCT 22-24 1996, vol. 1, 1996, pages 89-101, XP002137098 Richardson, TX, USA
- ANXIONNAZ H ET AL: "Near-wellbore 3D reconstruction of sedimentary bodies from borehole electrical images" PROCEEDINGS OF THE 1998 39TH ANNUAL LOGGING SYMPOSIUM;KEYSTONE, CO, USA MAY 26-29 1998, 1998, XP002137145 Trans SPWLA Annu Logging Symp;Transactions of the SPWLA Annual Logging Symposium (Society of Professional Well Log Analysts) 1998 Soc of Professional Well Log Analysts Inc, Houston, TX, USA

## Description

The present invention relates to a method of reconstructing a physical magnitude three-dimensionally in the surrounding of a borehole, and to the application of said method to integrating a plurality of sets of measurements performed in said environment.

It is already known that two-dimensional images of certain physical magnitudes, referred to below as "primary" magnitudes, can be obtained as developed over the wall of a borehole, on the basis of measurements of such a magnitude obtained at each depth in the borehole and at each azimuth. It is thus possible to reconstruct a developed image of said physical magnitude by giving a color to each pixel in a plane, defined by depth and azimuth coordinates, which color (or gray scale) is a function of the value of the physical magnitude as measured at that point.

By way of example, two-dimensional images have already been made of the electrical conductivity of the terrain surrounding a borehole, and more particularly of its resistivity in the immediate proximity of the wall of the borehole (FMI imaging). Other physical magnitudes can be envisaged, insofar as it is possible to measure them at given depth over a plurality of azimuths, as applies for example to acoustic impedance as measured by means of an ultrasound imaging device (UBI).

Nevertheless, until now such two-dimensional images have not been obtainable for certain physical magnitudes that can be measured at any given depth in a single determined azimuth only, possibly integrated over an azimuth window of varying size depending on the type of measurement. Under such circumstances, with such a physical magnitude, all that can be obtained is a curve known as a "log" showing how it varies in some given direction as a function of depth, which given direction can be fixed or otherwise.

As an example of such a "secondary" physical magnitude measured by means of a high resolution measuring device, mention can be made of density or of photoelectric factor. Mention can also be made of permeability as obtained from a nuclear magnetic resonance measuring device, or dielectric constant or wave attenuation, as recorded by means of an electromagnetic propagation measuring tool. All those measuring devices are mounted on a tool having tabs that are applied to the wall of the borehole in a given direction, and they therefore deliver for each depth increment, a value for the physical magnitude in question, as measured in said direction.

Those measurements thus suffer inherently from lack of coverage as a function of azimuth, which constitutes a limitation in formations that are heterogeneous, e.g. of the nodular, lenticular, conglomerated, fractured, or crossbedded type.

That is why proposals are made in the article "Near-wellbore 3D reconstruction of sedimentary bodies from borehole electrical image" published by H. Anxionnaz and J.P. Delhomme in the transactions of the 38th annual symposium of the SPWLA (1998), for a method of reconstructing a physical magnitude three-dimensionally in the surroundings of a borehole from a two-dimensional image of said physical magnitude as developed over the wall of the borehole.

That article relates more particularly to resistivity, with the developed image under consideration being that of resistivity in the immediate vicinity of the wall of the borehole as obtained using an FMI type tool (Schlumberger trademark: "fullbore formation microimager"), which produces an image having resolution of centimeter order.

The invention seeks firstly to provide a method making it possible to obtain a three-dimensional gridded image of a physical magnitude from linear sampling of said magnitude as a function of depth in the borehole, i.e. on the basis of a log of said magnitude, and from the two-dimensional image of some other or "primary" physical magnitude measured in the same borehole as a function both of depth and of azimuth.

The invention provides firstly a method of reconstructing a gridded three-dimensional image of a first physical magnitude in the surroundings of a borehole, the first physical magnitude being measured in the borehole as a function of depth,
characterized by: establishing a two-dimensional image of a second physical magnitude (2) on the wall of the borehole, the second physical magnitude being measured in the borehole as a function of depth and of azimuth; establishing a relationship (3) between the first and second physical magnitudes; and deducing a gridded three-dimensional image (8) of the first physical magnitude in the surroundings of the borehole from the established relationship.

In a first implementation, it is possible to deduce from the relationship between the first and second physical magnitudes, values for the first physical magnitude as a function of depth and of azimuth, i.e. by deducing from the relationship a two-dimensional image over the surface of the borehole for the first physical magnitude, and then deduce from the deduced values the gridded three-dimensional image of the first physical magnitude.

Nevertheless, a second implementation is preferable which uses the values of the second physical magnitude as measured as a function of depth and of azimuth, i.e. the image of the second physical magnitude developed over the surface of the borehole, to deduce a gridded three-dimensional image of the second physical magnitude, and then uses the relationship between the first and second physical magnitudes to deduce from the image the gridded three-dimensional image of the first physical magnitude in the surroundings of the borehole.

In a particular implementation of the invention, the relationship is established in compliance with the values of at least one auxiliary physical magnitude.

More particularly, the auxiliary physical magnitude may be sampled as a function of depth and integrated over at least one azimuth range.

In particular, the auxiliary physical magnitude may be one of the magnitudes selected from porosity measured by density logging, by sound logging, or by neutron logging, and shaliness as measured by gamma radiation.

Also in a particular implementation of the invention, the relationship is established by means of an artificial neural network.

It is possible, in order to deduce the values of the first physical magnitude (a "secondary" physical magnitude) from the relationship, to apply the relationship to the values of the second physical magnitude (a " primary" physical magnitude) sampled as a function of depth and of azimuth.

The method of the invention can also comprise measuring said first physical magnitude in said borehole as a function of depth; and measuring a second physical magnitude as a function of depth and of azimuth on the wall of the borehole and establishing a two-dimensional image of the second physical magnitude on the wall of the borehole.

There follows a description by way of non-limiting example of a particular implementation of the invention, described with reference to the accompanying diagrammatic drawings, in which:
- Figure 1 is an overall diagram of the method of the invention; and
- Figure 2 is a flow chart of the computation algorithm.

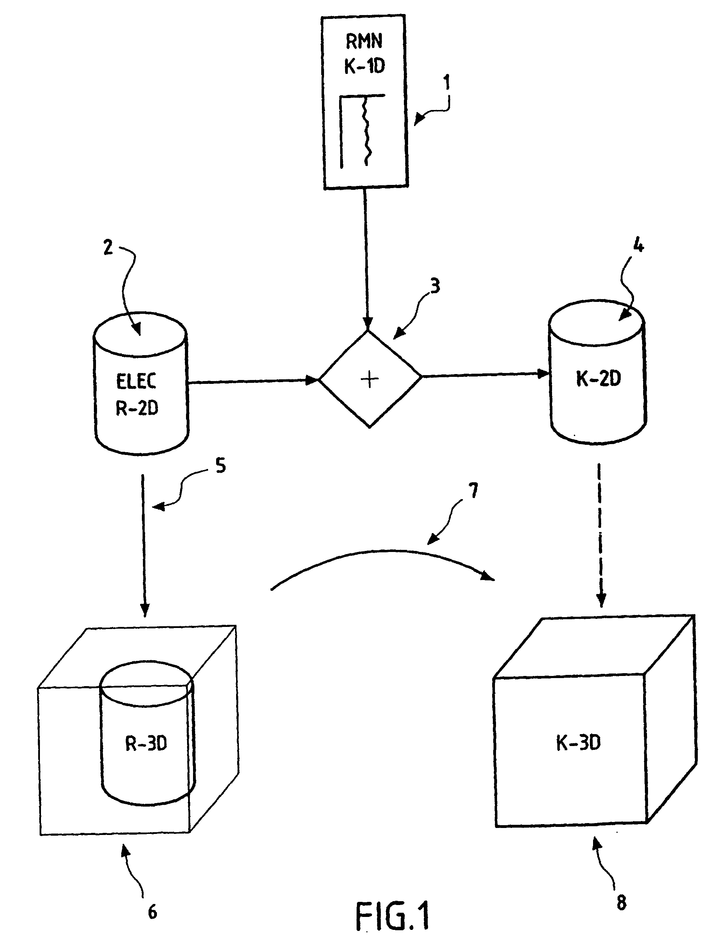

It can be seen in Figure 1 that the data on which the method of the invention is based is the results of two sets of measurements.

Firstly, there is a log 1 performed in a borehole, i.e. a one-dimensional reading, representing a first physical magnitude, for example in this case a log of permeability obtained by nuclear magnetic resonance measurements. By way of example, the log can be obtained using a CMR type tool (where CMR is a Schlumberger trademark: "combinable magnetic resonance").

The other set of measurements constitutes a two-dimensional image 2 over the surface of the wall of the borehole of a second physical magnitude, e.g. resistivity in the immediate vicinity of the wall. This image can be obtained by means of an FMI type tool (Schlumberger trademark: "fullbore formation microimager").

These two data sets are combined at 3, in the manner described below, so as to form a two-dimensional image 4 of the first physical magnitude over the surface of the wall of the borehole.

Thereafter, at 5, starting from the two-dimensional image 2, a three-dimensional image 6 is obtained of the second physical magnitude. For this purpose, it is possible to use the method described in the above-mentioned article "Near-wellbore 3D reconstruction of sedimentary bodies from borehole electrical images".

Finally, on the basis of this three-dimensional image 6 of the second physical magnitude, and from the two-dimensional image 4 of the first physical magnitude, the three-dimensional image 8 of the first physical magnitude is obtained at 7 in the manner described below. It will be seen that there is no need to reconstruct the two-dimensional image 4 of the first physical magnitude, but that it suffices to establish a relationship between the first and second physical magnitudes.

It should also be observed that it is possible to obtain the three-dimensional image 8 of the first physical magnitude from its two-dimensional image 4 in the same manner as the three-dimensional image 6 of the first physical magnitude is obtained from its two-dimensional image 2. Nevertheless, problems of resolution associated with the various images make it preferable to pass via the three-dimensional image 6 of the first physical magnitude and via the step 7.

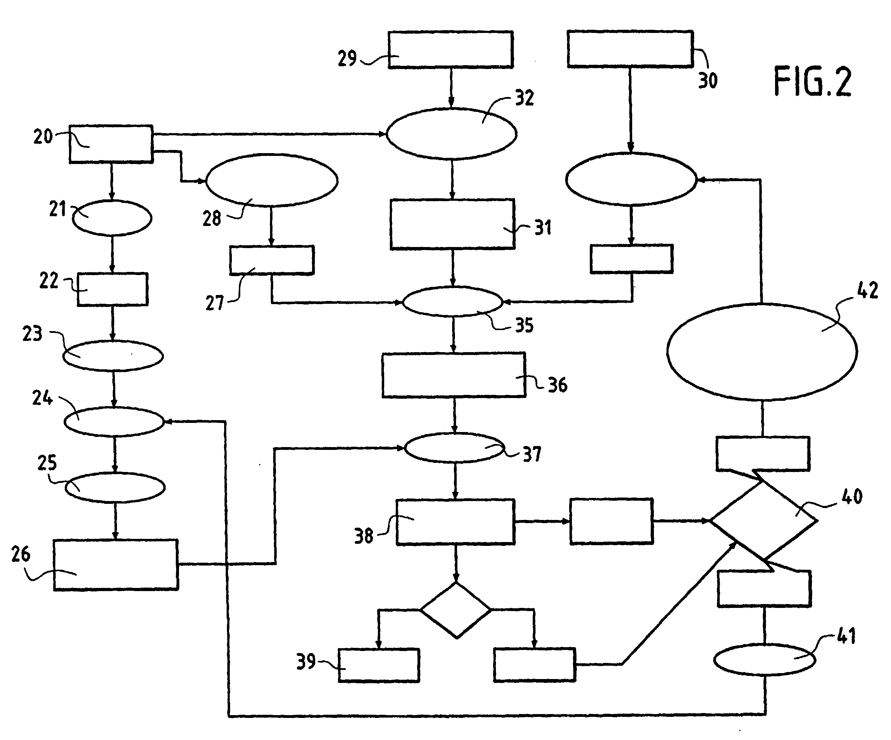

The method is described below in greater detail with reference to Figure 2.

Starting from the developed two-dimensional image 20 of the electrical conductivity of the ground surrounding the borehole, as obtained by FMI imaging, the first step 21 consists in defining hydrodynamic units. A hydrodynamic unit is defined as a geological unit liable to have hydrodynamic properties that are coherent.

Sedimentary structures deposited under the same transport conditions generally present particular geometrical characteristics associated with sediment transport direction. New transport conditions give rise to a new hydrodynamic unit.

Methods enabling hydrodynamic units to be defined are well known to the person skilled in the art.

The second step 23 consists in three-dimensional reconstruction of the shapes of the sedimentary structures around the borehole in the manner described in the above-specified article "Near-wellbore 3D reconstruction of sedimentary bodies from borehole electrical images". That deterministic modeling of the shapes of sedimentary structures based on dip data derived from the FMI image of the borehole contribute to discovering the directions of local aniosotropy in the three-dimensional distribution of conductivity (along and across the strata), and guides the following step of stochastic modeling.

The third step 24 consists in using stochastic modeling to simulate a three-dimensional distribution of electrical conductivity in the vicinity of the borehole.

For each hydrodynamic unit, the variation in three dimensions of electrical conductivity is initially characterized on the basis of the FMI data by means of a correlation function (i.e. by means of a variogram), after a logarithmic transform has been applied to the FMI data so as to compensate for its distribution being log-normal in the statistical sense. The correlation function is calculated both in the direction of the stratification and across it. Normally, it differs from one hydrodynamic unit to the next.

The correlation functions calculated for each hydrodynamic unit are then used to perform conditional stochastic simulation of electrical conductivity around the borehole to satisfy simultaneously the shape of the deposits as obtained in the second step 23, and the conductivity data as recorded from the wall of the borehole.

The simulation is performed for each point in three dimensions by using a correlation function with specific directions of aniosotropy as deduced from the deterministic model 23, and by using a specific anisotropy ratio deduced from analyzing the directional correlation. In practice, the distribution of the geometrical mean of electrical conductivity in 15 cm × 15 cm x 15 cm cells is simulated at 25 so as to provide a first change of scale so as to come closer to the resolution of a nuclear magnetic resonance CMR tool.

Essentially, steps 23 and 24 can be summarized as follows.

Initially (step 23), the values of a certain number of geometrical parameters (angles, distances, ...) are determined point by point within a certain volume around the borehole so as to satisfy the dip data at the wall of the borehole as obtained by the conductivity measurements. This determination can be performed in the manner described in Appendix A of the above-mentioned article.

Thereafter (step 24), variation in electrical conductivity at the wall of the borehole is determined initially both along and across the dip. This conductivity data is then exported to the entire volume surrounding the borehole, taking account of the variations in the parameters as determined in step 23. Appendix B of the above-specified document describes an algorithm enabling the problem of step 24 to be solved.

The result 26 of the preceding steps is a three-dimensional electrical conductivity grid made up of cube-shaped cells of side equal to 15 cm and describing a parallelepiped of 1 m × 1 m × N m centered on the axis of the borehole.

The purpose of the fourth step is to prepare for transforming electrical conductivities into permeability.

Firstly, texture logs 27 are optionally deduced from the FMI images 20 after dip compensation has been performed in 28, if necessary, for structural tilt. These texture logs contain additional information which is necessary for establishing the best relationship between permeability and electrical conductivity. It may be observed that a method of establishing such a relationship is described in French patent application No. 98 16614, published e.g. as EP-A-1016 883.

In addition to the two-dimensional resistivity image 20, the following are also available for establishing this relationship: volumetric logs 29 of auxiliary magnitudes such as porosity as measured by density logging, by sound logging, or by neutron logging, and also shaliness as measured by gamma radiation. Also available are CMR measurements 30 obtained by nuclear magnetic resonance.

Given the azimuth of the CMR sonde, it is necessary firstly to deduce a conductivity curve 31 from the FMI electrical images at the resolution of the nuclear magnetic resonance measurements, in alignment with the azimuth of the measurements. This is azimuth-matching step 32.

During this step, the volumetric logs 29 of the auxiliary data are also accurately aligned in depth with the permeability curve deduced from the nuclear magnetic resonance measurements and with the conductivity curve that is matched in resolution and azimuth as deduced from the FMI images.

An artificial neural network is then created at 35 and a stage of training the network makes it possible to establishes a relationship 36 between the permeability deduced from the nuclear magnetic resonance measurements and the electrical conductivity deduced from the FMI measurements, in compliance with volumetric logs of gamma ray porosity and of transit time, and optionally with texture logs deduced from images of the borehole are available.

The fifth step consists in converting the three-dimensional electrical conductivity grid into a permeability grid.

To this end, the above-mentioned relationship obtained by means of the artificial neural network is applied at 37 to each cell of the three-dimensional conductivity grid so as to deduce a three-dimensional permeability grid 38 therefrom at the resolution of the measurements performed by nuclear magnetic resonance.

The result can be used in 39 to prepare a campaign of downhole tests by means of a formation test tool (such as Schlumberger's tool known by the trademark MDT: "modular formation dynamics tester), by making an a priori model of fluid flow based on the three-dimensional permeability grid. Use of the tool can thus be optimized.

The result can also be used to compare horizontal and vertical permeability data Kₕ and Kᵥ obtained by an MDT test (at meter scale) with information supplied by the logging images (at centimeter scale) and with the permeabilities obtained by means of the invention using nuclear magnetic resonance (at decimeter scale).

These various types of data can initially be adjusted at 41 by matching the aniostropy parameters of the stochastic model when the values of anisotropy (Kₕ/Kᵥ) differ from one type of data to another.

They can also be adjusted in 42 by modifying the coefficients in the formulae for interpreting the nuclear magnetic resonance data when the values of [Kₕ * Kᵥ]^{1/2} differ from one type of data to another. More specifically, the coefficient C of Kenyon's formula is adjusted, e.g. as given in the article "Nuclear magnetic resonance imaging - technology for the 21st century", published by B. Kenyon and G. Gubelin, in the journal *Schlumberger Oil Review*, Autumn 1995.

## Claims

1. A method of reconstructing a gridded three-dimensional image of a first physical magnitude in the surroundings of a borehole, the first physical magnitude being measured in the borehole as a function of depth, **characterized by**:
- establishing a two-dimensional image of a second physical magnitude (2) on the wall of the borehole, the second physical magnitude being measured in the borehole as a function of depth and of azimuth;
- establishing a relationship (3) between the first and second physical magnitudes; and
- deducing a gridded three-dimensional image (8) of the first physical magnitude in the surroundings of the borehole from the established relationship.

2. A method as claimed in claim 1, further comprising deducing values (4) of the first physical magnitude as a function of depth and of azimuth from the relationship between the first and second physical magnitudes, and then deducing the gridded three-dimensional image of the first physical magnitude from the deduced values.

3. A method as claimed in claim 1, further comprising deducing a gridded three-dimensional image (6) of the second physical magnitude using the values of the second physical magnitude as measured as a function of depth and of azimuth in the borehole, and then deducing from the gridded three-dimensional image (6) of the second physical magnitude, the gridded three-dimensional image of the first physical magnitude in the surroundings of the borehole using the relationship between the first and second physical magnitudes.

4. A method as claimed in any of claims 1 to 3,further comprising establishing the relationship between the first and second physical magnitudes in compliance with the values of at least one auxiliary physical magnitude (29).

5. A method as claimed in claim 4, further comprising sampling the auxiliary physical magnitude as a function of depth and integrating it over at least one azimuth range.

6. A method as claimed in claim 5, wherein the auxiliary physical magnitude comprises porosity measured by density logging, by sound logging, or by neutron logging; or shaliness as measured by gamma radiation.

7. A method as claimed in any preceding claim, further comprising establishing the relationship by means of an artificial neural network.

8. A method as claimed in any preceding claim, further comprising applying the relationship to the values of the second physical magnitude sampled as a function of depth and azimuth in order to deduce the values of the first physical magnitude.

9. A method as claimed in any preceding claim, wherein the first physical magnitude is permeability.

10. A method as claimed in any preceding claim, wherein the second physical magnitude is resistivity.

11. A method as claimed in any preceding claim, further comprising:
- measuring the first physical magnitude in the borehole as a function of depth; and
- measuring the second physical magnitude as a function of depth and of azimuth and establishing a two-dimensional image of the second physical magnitude (2) on the wall of the borehole.

## Patentansprüche

1. Verfahren zum Rekonstruieren eines mit einem Gitternetz versehenen dreidimensionalen Bildes einer ersten physikalischen Größe in der Umgebung eines Bohrlochs, wobei die erste physikalische Größe in dem Bohrloch als Funktion der Tiefe gemessen wird, **gekennzeichnet durch**:
- Aufbauen eines zweidimensionalen Bildes einer zweiten physikalischen Größe (2) an der Wand des Bohrlochs, wobei die zweite physikalische Größe in dem Bohrloch als Funktion der Tiefe und des Azimut-Winkels gemessen wird;
- Herstellen einer Beziehung (3) zwischen der ersten und der zweiten physikalischen Größe; und
- Ableiten eines mit einem Gitternetz versehenen dreidimensionalen Bildes (8) der ersten physikalischen Größe in der Umgebung des Bohrlochs aus der hergestellten Beziehung.

2. Verfahren nach Anspruch 1, das femer das Ableiten von Werten (4) der ersten physikalischen Größe als Funktion der Tiefe und des Azimut-Winkels aus der Beziehung zwischen der ersten und der zweiten physikalischen Größe und dann das Ableiten des mit einem Gitternetz versehenen dreidimensionalen Bildes der ersten physikalischen Größe aus den abgeleiteten Werten umfaßt.

3. Verfahren nach Anspruch 1, das ferner das Ableiten eines mit einem Gitternetz versehenen dreidimensionalen Bildes (6) der zweiten physikalischen Größe unter Verwendung der Werte der zweiten physikalischen Größe, die als Funktion der Tiefe und des Azimut-Winkels im Bohrloch gemessen wird, und dann das Ableiten des mit einem Gitternetz versehenden dreidimensionalen Bildes der ersten physikalischen Größe in der Umgebung des Bohrlochs aus dem mit einem Gitternetz versehenen dreidimensionalen Bild (6) der zweiten physikalischen Größe unter Verwendung der Beziehung zwischen der ersten und der zweiten physikalischen Größe umfaßt.

4. Verfahren nach einem der Ansprüche 1 bis 3, das ferner das Herstellen der Beziehung zwischen der ersten und der zweiten physikalischen Größe gemäß den Werten wenigstens einer zusätzlichen physikalischen Größe (29) umfaßt.

5. Verfahren nach Anspruch 4, das ferner das Abtasten der zusätzlichen physikalischen Größe als Funktion der Tiefe und das Integrieren dieser Größe über wenigstens einen Azimut-Winkelbereich umfaßt.

6. Verfahren nach Anspruch 5, bei dem die zusätzliche physikalische Größe die durch Dichteprotokollierung, durch Schallprotokollierung oder durch Neutronenprotokollierung gemessene Porosität oder den durch Gammastrahlung gemessenen Schiefergehalt umfaßt.

7. Verfahren nach einem vorhergehenden Anspruch, das femer das Herstellen der Beziehung mittels eines künstlichen neuronalen Netzes umfaßt.

8. Verfahren nach einem vorhergehenden Anspruch, das femer das Anwenden der Beziehung auf die Werte der zweiten physikalischen Größe, die als Funktion der Tiefe und des Azimut-Winkels abgetastet wird, umfaßt, um die Werte der ersten physikalischen Größe abzuleiten.

9. Verfahren nach einem vorhergehenden Anspruch, bei dem die erste physikalische Größe die Permeabilität ist.

10. Verfahren nach einem vorhergehenden Anspruch, bei dem die zweite physikalische Größe der spezifische elektrische Widerstand ist.

11. Verfahren nach einem vorhergehenden Anspruch, das femer umfaßt:
- Messen der ersten physikalischen Größe in dem Bohrloch als Funktion der Tiefe; und
- Messen der zweiten physikalischen Größe als Funktion der Tiefe und des Azimut-Winkels und Aufbauen eines zweidimensionalen Bildes der zweiten physikalischen Größe (2) an der Wand des Bohrlochs.

## Revendications

1. Procédé de reconstruction d'une image tridimensionnelle maillée d'une première grandeur physique dans le voisinage d'un forage, la première grandeur physique étant mesurée dans le forage en fonction de la profondeur, **caractérisé par** :
- l'établissement d'une image bidimensionnelle d'une deuxième grandeur physique (2) sur la paroi du forage, la deuxième grandeur physique étant mesurée dans le forage en fonction de la profondeur et de l'azimut ;
- l'établissement d'une relation (3) entre les première et deuxième grandeurs physiques ; et
- la déduction d'une image tridimensionnelle maillée (8) de la première grandeur physique dans le voisinage du forage à partir de la relation établie.

2. Procédé selon la revendication 1, comprenant en outre la déduction des valeurs (4) de la première grandeur physique en fonction de la profondeur et de l'azimut, de la relation entre les première et deuxième grandeurs physiques, puis la déduction de l'image tridimensionnelle maillée de la première grandeur physique des valeurs déduites.

3. Procédé selon la revendication 1, comprenant en outre la déduction d'une image tridimensionnelle maillée (6) de la deuxième grandeur physique en utilisant les valeurs de la deuxième grandeur physique, mesurée en fonction de la profondeur et de l'azimut dans le forage, puis la déduction de l'image tridimensionnelle maillée (6) de la deuxième grandeur physique, l'image tridimensionnelle maillée de la première grandeur physique dans le voisinage du forage en utilisant la relation entre les première et deuxième grandeurs physiques.

4. Procédé selon l'une quelconque des revendications 1 à 3, comprenant en outre l'établissement de la relation entre les première et deuxième grandeurs physiques conformément aux valeurs d'au moins une grandeur physique auxiliaire (29).

5. Procédé selon la revendication 4, comprenant en outre l'échantillonnage de la grandeur physique auxiliaire en fonction de la profondeur et son intégration sur au moins une gamme d'azimut.

6. Procédé selon la revendication 5, dans lequel la grandeur physique auxiliaire comprend une porosité mesurée par diagraphie de la densité, diagraphie sonique ou diagraphie neutron, ou une teneur en argile mesurée par rayonnement gamma.

7. Procédé selon l'une quelconque des revendications précédentes, comprenant en outre l'établissement de la relation au moyen d'un réseau neuronal artificiel.

8. Procédé selon l'une quelconque des revendications précédentes, comprenant en outre l'application de la relation aux valeurs de la deuxième grandeur physique échantillonnées en fonction de la profondeur et de l'azimut afin de déduire les valeurs de la première grandeur physique.

9. Procédé selon l'une quelconque des revendications précédentes, dans lequel la première grandeur physique est la perméabilité.

10. Procédé selon l'une quelconque des revendications précédentes, dans lequel la deuxième grandeur physique est la résistivité.

11. Procédé selon l'une quelconque des revendications précédentes, comprenant en outre :
- la mesure de la première grandeur physique dans le forage en fonction de la profondeur ; et
- la mesure de la deuxième grandeur physique en fonction de la profondeur et de l'azimut et l'établissement d'une image bidimensionnelle de la deuxième grandeur physique (2) sur la paroi du forage.
